# EUROPÄISCHE PATENTANMELDUNG

(11) **EP 1 063 134 A1**
(43) Veröffentlichungstag der Anmeldung: **27.12.2000**
(21) Anmeldenummer: 99112170.8
(22) Anmeldetag: 24.06.1999
(51) Int. Cl.: B60R 16/02

(54) **Vorrichtung zum elektrischen Anschliessen einer Vielzahl von auf einer vorzugsweise in einen Fahrzeugsitz integrierbaren Sensormatte angeordneten Sensoren**

(71) Anmelder: SIEMENS AKTIENGESELLSCHAFT, 80333 München (DE)
(72) Erfinder: Dirmeyer, Josef, 92439 Bodenwöhr (DE); Klier, Alfred, 94347 Ascha (DE); Voigt, Michael, 93055 Regensburg (DE)

(57) **Zusammenfassung**

Eine Vielzahl von auf einer Sensormatte angeordneten Sensoren ist über elektrische Anschlußleitungen (8) an einen Schaltungsbaustein (22) angeschlossen; von dem Verbindungsleitungen (24), deren Anzahl kleiner ist als die der Anschlußleitungen, an eine Elektronikeinheit (26) führen. Der Schaltungsbaustein verarbeitet die Signale der Sensoren derart, daß die Signale einzeln über die Verbindungsleitungen weitergeleitet werden. Die gesamte Anschlußvorrichtung ist in einen Bereich der Sensormatte integriert, so daß keine vieladrigen Kabel zum Verbinden der Vielzahl von Sensoren mit einer Elektronikeinheit, beispielsweise einem Steuergerät erforderlich sind.

## Beschreibung

Die Erfindung betrifft eine Vorrichtung zum elektrischen Anschließen einer Vielzahl von auf einer vorzugsweise in einen Fahrzeugsitz integrierbaren Sensormatte angeordneten Sensoren mit eigenen elektrischen Anschlußleitungen an eine Elektronikeinheit.

Sensoren finden in der Technik Verwendungen für unterschiedlichste Zwecke. Beispielsweise können gleichartige Temperatursensoren auf einer Fläche angeordnet sein, um die Temperaturverhältnisse auf der Fläche zu ermitteln, oder es kann eine Vielzahl von Sensoren vorgesehen sein, um Druckprofile beispielsweise an aerodynamischen Flächen aufzunehmen, usw..

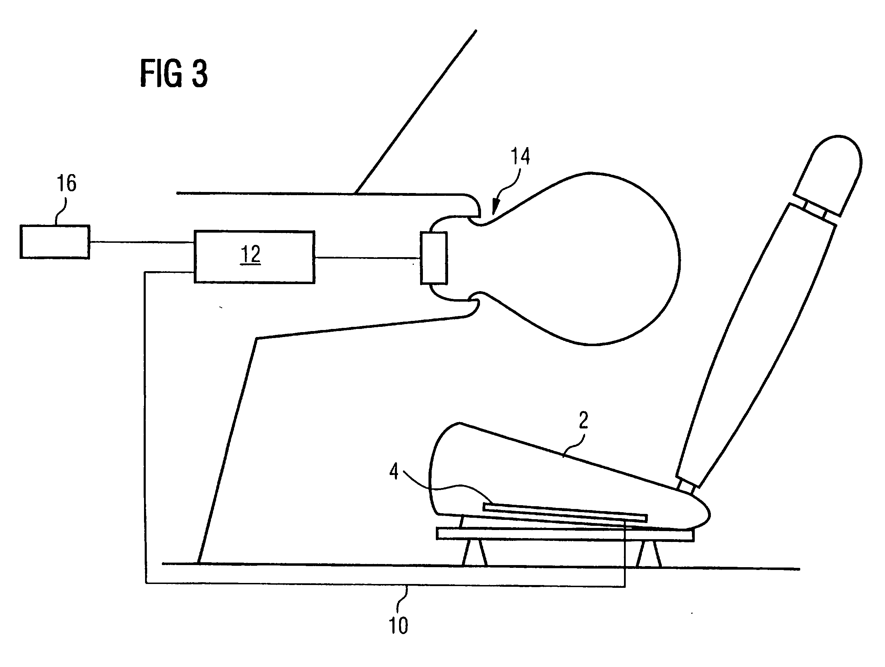

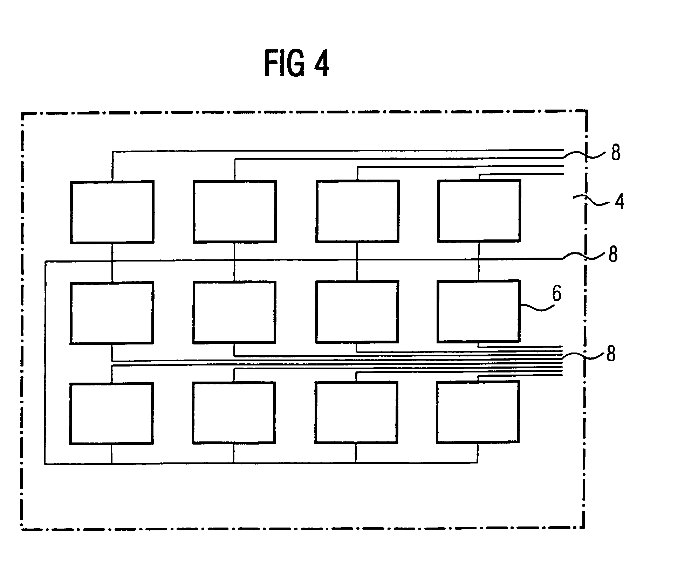

In Fig. 3 ist eine aus der US-PS 5,493,311 bekannte Airbagvorrichtung dargestellt, die eine in einen Fahrzeugsitz 2 integrierte Sensormatte 4 aufweist, auf der eine Vielzahl von Drucksensoren 6 angeordnet ist (Fig. 4). Die einzelnen Drucksensoren 6, die flächig auf der Sensormatte 4 verteilt sind, sind beispielsweise schwingfähige, piezoelektrische Plättchen, die zu Schwingungen angeregt werden und deren Schwingungsfrequenz sich bei einer Druckbelastung ändert. Die Drucksensoren 6 können auch einfacher aufgebaut sein, in dem sie unmittelbar auf den auf sie einwirkenden Druck ansprechen. Sie können kapazitive Sensoren sein usw..

Die einzelnen, in die Sensormatte integrierten Drucksensoren 6 benötigen je nach Bauart zwei oder mehr Anschlußleitungen 8, die in einem dicken Leitungsstrang 10, dessen Polzahl der Anzahl der Anschlußleitungen 8 entspricht, aus dem Sitz 2 zu einem Steuergerät 12 geführt sind, das mit einer Airbagbaugruppe 14 und einem Crashsensor 16 verbunden ist. In dem Steuergerät 12 erfolgt eine Auswertung der Signale des Crashsensors 16 und der Signale der Drucksensoren 6 der Sensormatte 4, anhand derer eine Sitzbelegung und die spezifische Position eines Fahrzeuginsassen sensiert werden kann, der sich auf dem Fahrzeugsitz 2 befindet, so daß der Airbag zweckentsprechend ausgelöst werden kann.

Der vieladrige, dicke Leitungsstrang 10 ist, bedingt durch seinen Platzbedarf, die nicht gegebenen Knickfestigkeit und die erforderlichen zahlreichen elektrischen Anschlüsse mit einer Vielzahl von Problemen behaftet.

Der Erfindung liegt die Aufgabe zugrunde, eine gattungsgemäße Vorrichtung dahingehend weiterzubilden, daß die Vielzahl von Sensoren in einfacher Weise elektrisch anschließbar ist.

Diese Aufgabe wird mit den Merkmalen des Hauptanspruchs gelöst.

Mit Hilfe des erfindungsgemäßen Schaltungsbausteins, der unmittelbar auf der Sensormatte angeordnet sein kann, ist es möglich, eine Verbindungsleitung mit wenigen Polen zu der Elektronikeinheit bzw. dem Steuergerät zu führen, wodurch der Platzbedarf vermindert ist, geringere Kosten entstehen und eine höhere Zuverlässigkeit erzielt wird.

Die Unteransprüche sind auf vorteilhafte Weiterbildungen der erfindungsgemäßen Vorrichtung gerichtet.

Die erfindungsgemäße Vorrichtung kann für jedwelche Vielzahl von auf einer gemeinsamen Matte oder Trägerfolie angeordneten Sensoren verwendet werden, die an ein gemeinsames Steuergerät oder eine gemeinsame Elektronikeinheit angeschlossen werden müssen.

Die Erfindung wird im folgenden anhand schematischer Zeichnungen beispielsweise und mit weiteren Einzelheiten erläutert.

Es stellen dar:
- Fig. 1: eine Aufsicht auf eine erste Ausführungsform der Vorrichtung,
- Fig. 2: eine Aufsicht auf eine zweite Ausführungsform der Vorrichtung,
- Fig. 3: eine aus dem Stand der Technik bekannte Airbagvorrichtung mit einer in einem Fahrzeugsitz enthaltenen Sensormatte und
- Fig. 4: eine Anordnung von Drucksensoren in der Sensormatte der Fig. 3.

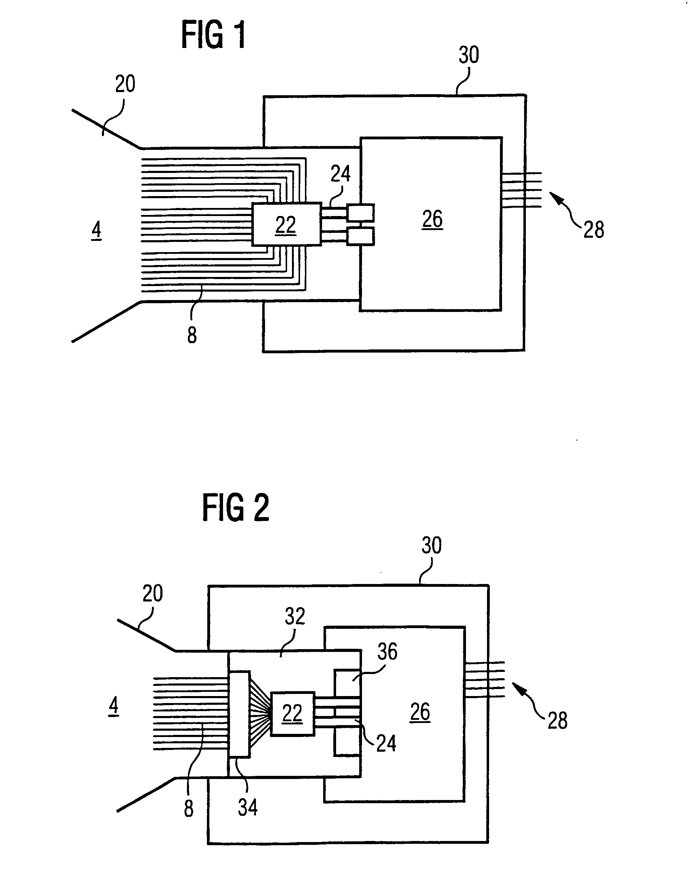

Fig. 1 zeigt einen Endbereich 20 einer Sensormatte 4, wie sie beispielsweise in Fig. 4 dargestellt ist. Die Vielzahl der Anschlußleitungen 8, deren Anzahl von der Zahl der Sensoren und deren Ausbildung (Stromversorgungsleitungen und davon getrennte Signalleitungen oder gemeinsame Stromversorgungs- und Signalleitungen) abhängt, ist beispielsweise als Leiterbahnen in die Matte integriert.

An dem Endbereich 20 der Sensormatte 4 ist ein Schaltungsbaustein 22 angebracht, vorzugsweise ein ASIC, mit dem eine Verarbeitung der über die einzelnen Anschlußleitungen 8 einkommenden Signale der Durcksensoren derart erfolgt, daß diese Signale über wenige Verbindungsleitungen 24 an einen Elektronikbaustein 26 zur weiteren Signalverarbeitung geleitet werden können. Von dem Elektronikbaustein 26 führt ein beispielsweise fünfpoliges Anschlußkabel 28 beispielsweise zu dem Steuergerät 12 der Fig. 3.

Der Schaltungsbaustein 22 enthält vorzugsweise eine Multiplexschaltung, mit der die Signale der Drucksensoren 6 seriell oder frequenzmoduliert parallel über lediglich zwei Verbindungsleitungen 24 an den Elektronikbaustein 26 weitergeleitet werden.

In dem Elektronikbaustein 26 kann eine Signalverarbeitung derart erfolgen, daß dem Steuergerät 12 über das Anschlußkabel 28 ein codiertes Signal zugeleitet wird, das Information darüber enthält, ob der Sitz überhaupt belegt ist, wo sich die Person befindet, usw.. Aus dieser Information wird errechnet, wie schwer eine auf dem Sitz sitzende Person ist, mit welcher Verzögerung und/oder welcher Stärke der Airbag gegebenenfalls ausgelöst und aufgeblasen werden soll.

Die Steuerungs- und Signalverarbeitungsaufgaben zwischen dem Schaltungsbaustein 22 und dem Elektronikbaustein 26 können unterschiedlichster Art sein. Im Extremfall kann der Elektronikbaustein 26 ganz entfallen und können die Verbindungsleitungen 24 unmittelbar mit dem Steuergerät 12 verbunden werden, wobei der Schaltungsbaustein 22 zusätzliche Aufgaben der Signalauswertung übernehmen kann.

Die konstruktive Ausführungsform der beschriebenen Vorrichtung ist vorzugsweise wie folgt:

Der als Chip ausgebildete Schaltungsbaustein 22 wird bei der Herstellung der Sensormatte 4 in diese integriert oder auf sie aufgeklebt und seine Anschlüsse werden mit den Enden der Anschlußleitungen 8 beispielsweise über einen elektrisch leitenden Kleber verbunden. Der Kleber kann nur in eine Richtung leitend sein (Z-leitend) und durch Wärme, mit UV-Licht oder mit einer weiteren Komponente aushärten. Es kann die sogenannte "Heat-Seal Technologie" zum Einsatz kommen.

Alternativ kann eine mechanische Kontaktierung durch Klemmung erfolgen, wie sie beispielsweise bei der Montage eines Chips auf einer Smart-Card verwendet wird.

Zur mechanischen Festlegung des Endbereiches 20 der Sensormatte 4 und des Elektronikbausteins 26 dient ein beispielsweise aus Kunststoff bestehendes Formteil 30, das beispielsweise aus bei Hitze schmelzendem Material bestehen kann und unmittelbar bei der Festlegung ausgeformt wird. Die elektrische Verbindung zwischen den Verbindungsleitungen 24 und den nicht im einzelnen dargestellten Anschlüssen des Elektronikbausteins 26 geschieht vorzugsweise durch Crimpen.

Die mechanische Verbindung zwischen dem Endbereich 20 und dem Formteil 30 sowie dem Elektronikbaustein 26 und dem Formteil 30 kann durch Kleben oder sonstwie in an sich bekannter Weise mechanisch erfolgen.

Fig. 2 zeigt eine gegenüber Fig. 1 abgeänderte Ausführungsform, bei für funktionsähnliche Teile gleiche Bezugszeichen verwendet sind.

Bei der Ausführungsform gemäß Fig. 2 ist ein als Folie ausgebildeter Zwischenträger 32 vorgesehen, der den Schaltungsbaustein 22 mit einem Anschluß 34 zum Anschließen der von den einzelnen Drucksensoren kommenden Anschlußleitungen 8 enthält und einen weiteren Anschluß 36 zum Anschließen der Verbindungsleitungen 24 an den Elektronikbaustein 26.

Die Verbindung zwischen den Anschlußleitungen 8 und den zugehörigen, auf dem Zwischenträger 32 ausgebildeten Leiterbahnen erfolgt vorzugsweise durch Verklebung im Bereich des Anschlusses 34. Die Verbindung zwischen den Verbindungsleitungen 24 und den zugehörigen Kontakten des Elektronikbausteins 26 erfolgt vorzugsweise durch Bügellöten im Bereich des Anschlusses 36.

Der Endbereich 20, der Zwischenträger 32 und der Elektronikbaustein 26 sind auf dem Formteil 30 befestigt.

## Patentansprüche

1. Vorrichtung zum elektrischen Anschließen einer Vielzahl von auf einer vorzugsweise in einen Fahrzeugsitz (2) integrierbaren Sensormatte (4) angeordneten Sensoren (6) mit eigenen elektrischen Anschlußleitungen (8) an eine Elektronikeinheit (26), **gekennzeichnet** durch einen Schaltungsbaustein (22), der Anschlüsse zum Anschließen der zu den einzelnen Sensoren führenden Anschlußleitungen (8) und Anschlüsse zum Anschließen von Verbindungsleitungen (24) an die Elektronikeinheit (26) aufweist, wobei die Anzahl der Verbindungsleitungen geringer ist als die der Anschlußleitungen, und der Schaltungsbaustein die Signale der Sensoren derart verarbeitet, daß sie einzeln über die Verbindungsleitungen weitergeleitet werden.

2. Vorrichtung nach Anspruch 1, **dadurch gekennzeichnet**, daß der Schaltungsbaustein (22) eine Multiplexschaltung enthält.

3. Vorrichtung nach Anspruch 1 oder 2, **dadurch gekennzeichnet**, daß die Verbindungsleitung (24) zweipolig ist.

4. Vorrichtung nach einem der Ansprüche 1 bis 3, **dadurch gekennzeichnet**, daß der Schaltungsbaustein (22) und die Anschlußleitungen (24) auf der Sensormatte angeordnet sind.

5. Vorrichtung nach Anspruch 4, **dadurch gekennzeichnet**, daß ein Formteil (30) vorgesehen ist, an dem ein Bereich der Sensormatte (4), der den an die Anschlußleitungen (8) angeschlossenen Schaltungsbaustein (22) und den an diesen angeschlossenen Verbindungsleitungen (24) trägt, und die an die Verbindungsleitungen angeschlossene Elektronikeinheit (26) befestigt sind.

6. Vorrichtung nach einem der Ansprüche 1 bis 3, **dadurch gekennzeichnet**, daß zwischen der Sensormatte (4) und dem Elektronikbaustein (26) ein Zwischenträger (32) vorgesehen ist, auf dem der Schaltungsbaustein (22) mit Leiterbahnen zum Anschließen der Anschlußleitungen (8) und die Verbindungsleitungen (24) angeordnet sind.

7. Vorrichtung nach Anspruch 6, **dadurch gekennzeichnet**, daß ein mit den Anschlußleitungen (8) ausgebildeter Endbereich (20) der Sensormatte (4), der Zwischenträger (32) und der Elektronikbaustein (26) auf einem Formteil (30) angebracht sind.

8. Vorrichtung nach einem der Ansprüche 1 bis 7, **dadurch gekennzeichnet**, daß die Kontaktierung zwischen den Anschlüssen des Schaltungsbausteins (22) und den Anschlußleitungen (8) mittels eines leitfähigen Klebers erfolgt.

9. Vorrichtung nach einem der Ansprüche 1 bis 8, **dadurch gekennzeichnet**, daß die elektrische Verbindung zwischen den Verbindungsleitungen (24) und dem Elektronikbaustein (26) durch Bügellöten erfolgt.
